(19) Europäisches Patentamt
European Patent Office
Office européen des brevets

(11) Veröffentlichungsnummer: **0 005 772**
**B1**

# (12) EUROPÄISCHE PATENTSCHRIFT

(45) Veröffentlichungstag der Patentschrift: **07.03.84**

(51) Int. Cl.³: **C 08 K 5/54**, C 09 K 15/32

(21) Anmeldenummer: **79101521.7**

(22) Anmeldetag: **18.05.79**

## (54) Verfahren zur Stabilisierung von Polymeren.

(30) Priorität: **31.05.78 DE 2823846**

(43) Veröffentlichungstag der Anmeldung: **12.12.79 Patentblatt 79/25**

(45) Bekanntmachung des Hinweises auf die Patenterteilung: **07.03.84 Patentblatt 84/10**

(84) Benannte Vertragsstaaten: **AT BE DE FR GB IT NL SE**

(56) Entgegenhaltungen:
**DE - A - 2 745 546**
**US - A - 3 054 818**
**US - A - 3 491 137**
**US - A - 4 032 510**

**Die Akte enthält technische Angaben, die nach dem Eingang der Anmeldung eingereicht wurden und die nicht in dieser Patentschrift enthalten sind.**

(73) Patentinhaber: **SIEMENS AKTIENGESELLSCHAFT, Berlin und München Wittelsbacherplatz 2, D-8000 München 2 (DE)**

(72) Erfinder: **Kleeberg, Wolfgang, Dr., Hessenstrasse 7, D-8520 Erlangen (DE)**
Erfinder: **von Gentzkow, Wolfgang, Dr., Geschwister-Scholl-Strasse 1, D-8520 Erlangen (DE)**
Erfinder: **Rogler, Wolfgang, Dr., Geschwister-Scholl-Strasse 4, D-8520 Erlangen (DE)**
Erfinder: **Rubner, Roland, Dr., Buchenring 15, D-8551 Röttenbach (DE)**

EP 0 005 772 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Stabilisierung von Polymeren

Die Erfindung betrifft ein Verfahren zur Stabilisierung von Polymeren gegen oxidativen und/oder thermischen Abbau mittels phenolischer Oxidationsinhibitoren mit teilweise durch Silyl- bzw. Silylgruppen substituierten inhibierungsaktiven Hydroxylgruppen.

Organische Polymerwerkstoffe werden für viele technische Zwecke verwendet. Vorausgesetzt für ihre hinreichende Gebrauchstüchtigkeit über einen möglichst langen Zeitraum ist eine entsprechend langandauernde chemische Beständigkeit unter Einsatzbedingungen. Wie die Erfahrung zeigt, kann man von dieser Voraussetzung in vielen Fällen nicht ausgehen. Polymere Materialien, insbesondere solche mit einem hohen aliphatischen Kohlenwasserstoffanteil oder mit besonders leicht oxidablen aliphatischen Gruppen, wie Polyolefine, Polyoxymethylene, Polyphenylenoxide und bestimmte Polyamide, unterliegen bei erhöhten Temperaturen einem beschleunigten oxidativen und auch thermischen Abbau. Dadurch werden die Gebrauchseigenschaften verschlechtert und die Gebrauchsdauer wird wesentlich verkürzt. Um die benötigten Eigenschaftswerte über einen wesentlich längeren Zeitraum aufrecht zu erhalten, müssen solche Polymeren gegen thermooxidativen Abbau stabilisiert werden. Dies geschieht im allgemeinen durch Oxidationsinhibitoren. Oxidationsinhibitoren sind phenolische bzw. aminische organische Verbindungen, die als Radikalfänger wirken und somit die bei der Oxidation von Polymeren ablaufenden radikalen Abbaumechanismen unterbrechen oder verhindern können.

In «Ullmanns Encyklopädie der Technischen Chemie», 4. Auflage, Band 8, Seiten 19 bis 42, sind die Wirkungsweise und die wichtigsten chemischen Strukturmerkmale von Oxidationsinhibitoren anhand von Beispielen bekannter und kommerziell erhältlicher Produkte beschrieben. Weiteres Material über Oxidationsinhibitoren findet sich in: W.L. Hawkins «Polymer Stabilization», Wiley-Interscience, John Wiley & Sons, Inc., New York, London, 1972, und G.K. Cowell «Additives for Plastics – Antioxidants», Plastics Engineering, Seiten 51 bis 57, 1976.

Aufgrund des bekannten umfangreichen Materials über Oxidationsinhibitoren und anhand der Vielzahl bekannter Produkte lassen sich Oxidationsinhibitoren durch folgende Merkmale kennzeichnen:

1. Sie enthalten wenigstens eine phenolische, möglichst sterisch gehinderte Hydroxyl- und/oder wenigstens eine sekundäre aromatische Aminogruppe mit radikalisch leicht abspaltbarem Wasserstoff oder sie sind heterocyclische Verbindungen mit NH-Gruppierungen. Dadurch können sie mit den bei der oxidativen Alterung gebildeten Radikalen unter Übertragung von wenigstens einem Wasserstoffatom reagieren.

2. Aufgrund ihrer chemischen Struktur sind sie befähigt, nach der Abspaltung von Wasserstoff energiearme Radikale auszubilden bzw. durch Folgereaktionen in stabile, nichtradikalische Verbindungen überzugehen.

Oxidationsinhibitoren bilden entweder allein oder zusammen mit komplementär oder synergistisch wirkenden Verbindungen, wie Peroxidzersetzern, Lichtstabilisatoren oder Metalldesaktivatoren, die Basis einer wirksamen Langzeitstabilisierung oxidationsempfindlicher Polymerer oder entsprechender niedermolekularer Stoffe. Der Grad ihrer Wirksamkeit kann durch strukturelle Merkmale ihres aromatischen oder heterocyclischen Grundgerüstes oder durch Substituenten beeinflusst werden.

Generell werden Oxidationsinhibitoren – schon aus Kostengründen – nur in kleinen Konzentrationen (etwa $10^{-2}$ bis 5 Masse-%) eingesetzt. Die Löslichkeit der sehr polaren Oxidationsinhibitoren in den zu stabilisierenden unpolaren Stoffen, wie Polyolefinen, vor allem in teilkristallinen Polymeren, wie Polyäthylen und Polypropylen, ist jedoch im allgemeinen so gering, dass sich die für eine optimale Wirksamkeit erforderliche Konzentration und molekulardisperse Verteilung nicht erreichen lassen. Insbesondere bei der Stabilisierung von Polymeren wird beobachtet, dass die Oxidationsinhibitoren als Folge ihrer geringen Löslichkeit zur Polymeroberfläche wandern, von welcher sie sich – ihrem Dampfdruck entsprechend – mehr oder weniger leicht verflüchtigen, so dass das Polymere – insbesondere bei erhöhten Temperaturen – sehr rasch an diesen Stabilisatoren verarmt. Auf diese Weise kann selbst bei Verwendung chemisch hochwirksamer Oxidationsinhibitoren eine schnelle oxidative Alterung durch vorzeitigen Verlust der Oxidationsinhibitoren eintreten.

Um die damit verbundene Stabilitätseinbusse zu vermeiden, werden immer mehr Versuche unternommen, die Löslichkeit der Oxidationsinhibitoren zu verbessern. Dies geschieht beispielsweise durch Substitution mit langkettigen Alkylresten, durch Zugabe von hochsiedenden flüssigen siliciumorganischen Verbindungen als Lösungsvermittler oder durch Substitution durch Silylreste (R.V. Albarino und H. Schonhorn, «J. Appl. Polym. Sci.», Vol. 17 (1973), Seite 3323, Vol. 18 (1974), Seite 635, und Vol. 19 (1975), Seite 2667). Die Substitution durch Silylreste erfolgt dabei z.B. durch Umsetzung von Oxidationsinhibitoren über zusätzliche, nicht oxidationsinhibierende Hydroxylgruppen mit geeigneten siliciumorganischen Verbindungen, wobei der Wasserstoff dieser OH-Gruppen durch Silylgruppen substituiert wird. Aufgrund des Erfordernisses zusätzlicher funktioneller Gruppen zur Ermöglichung der Silylsubstitution ist aber die Zahl der in Frage kommenden und verfügbaren Oxidationsinhibitoren dieser Art stark eingeschränkt.

Aus US-A-4032510 sind Verbindungen zur Stabilisierung polymerer Kohlenwasserstoffe gegen thermischoxidativen und photochemischen Abbau in Form von Bisphenolen, deren phenolische

OH-Gruppen verkappt sind, folgender Struktur bekannt:

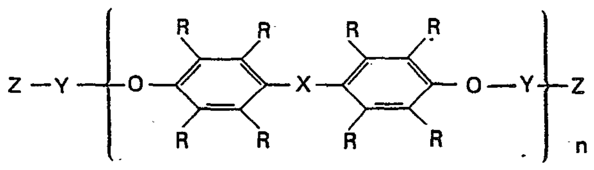

Da das Bindeglied X allein acht verschiedene Bedeutungen haben kann (wie –S–, $–CR_2–$, –SO–, $–SO_2–$, –NR– und –CO–), und die Gruppe Y sogar elf, worunter sich auch phosphor-, bor- und siliciumhaltige Gruppierungen befinden, ergibt sich bereits aufgrund von X und Y eine grosse Zahl von Kombinationsmöglichkeiten, d.h. eine Vielzahl von Verbindungen. Die experimentell beschriebenen der bekannten Stabilisatoren weisen ferner für X und Y ausschliesslich Kohlenstoffgruppierungen auf; Y ist nämlich meist eine Carbonylfunktion (–CO–) und X eine Alkylengruppierung ($–CR_2–$). Dabei ist auch bemerkenswert, dass de Wirksamkeit dieser Stabilisatoren ausschliesslich in Gegenwart des bekannten Synergisten Distearylthiodipropionat untersucht wurde, wobei ausserdem die Konzentration des Synergisten das 2,5- bis 3fache der Stabilisatorenkonzentration betrug.

DE-A-2745546 beschreibt den Einsatz von mit Silylgruppen ($SiR_3$) verkappten phenolischen und aminischen Oxidationsinhibitoren bei Massen aus ungesättigten Ölen oder Harzen, im wesentlichen selbsttrocknende Anstrichmittel, d.h. bei ungesättigten Systemen, die relativ langsam (über Stunden oder Tage) vernetzen. Die beschriebenen Oxidationsinhibitoren sind sämtlich monomerer Natur.

Aufgabe der Erfindung ist es, bei einem Verfahren der eingangs genannten Art zur Stabilisierung von Polymeren gegen oxidativen und/oder thermischen Abbau das Angebot an wirksamen Oxidationsinhibitoren hoher Löslichkeit wesentlich zu erhöhen.

Dies wird erfindungsgemäss dadurch erreicht, dass oligomere Verbindungen folgender Struktur als Oxidationsinhibitoren verwendet werden:

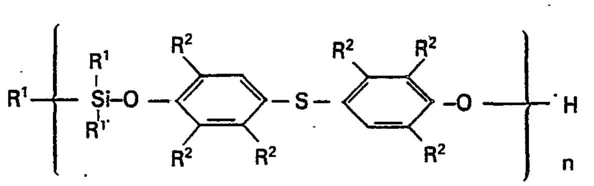

wobei n eine Zahl bis 20 ist, die Reste $R^1$ gleich oder verschieden sind und folgende Bedeutung haben: Alkyl mit 1 bis 3 C-Atomen, Phenyl, Cycloalkyl, Alkyloxy mit 1 bis 3 C-Atomen, Methoxyäthoxy, Äthoxyäthoxy, Aryloxy, Aralkyloxy mit 7 bis 11 C-Atomen und Cycloalkyloxy, und die Reste $R^2$ gleich oder verschieden sind und Wasserstoff oder n- und iso-Alkyl mit 1 bis 5 C-Atomen bedeuten oder die beiden ortho-ständigen Substituenten $R^2$ zusammen Benzo sein können.

Bevorzugt werden dabei Verbindungen eingesetzt, bei denen die Reste $R^1$ Alkyl mit 1 bis 3 C-Atomen, Phenyl, Alkyloxy mit 1 bis 3 C-Atomen, Methoxyäthoxy und Äthoxyäthoxy sind.

Die erfindungsgemässen Oxidationsinhibitoren sind nicht nur in grosser Zahl zugänglich, sondern sie können darüber hinaus auch in wirtschaftlicher Weise hergestellt werden. Völlig überraschend ist ferner die Tatsache, dass die erfindungsgemässen Oxidationsinhibitoren, die sozusagen verkappt sind, da ihre inhibierungsaktiven Funktionen durch Schutzgruppen substituiert sind, sowohl unvernetzten als auch radikalisch vernetzten Polymeren eine höhere Alterungsstabilität verleihen als äquivalente Konzentrationen unverkappter Oxidationsinhibitoren. Dies ist deswegen überraschend, da in der Literatur auch die Auffassung vertreten wird, dass Oxidationsinhibitoren ihre Wirksamkeit verlieren, wenn ihre aktiven NH- bzw. OH-Gruppierungen durch Umsetzung mit Organosilanen desaktiviert werden (vgl.: R.V.Albarino und H.Schonhorn, «J. Appl. Polym. Sci.», Vol. 17 (1973), Seite 3325).

Die erfindungsgemässen Oxidationsinhibitoren zeigen in den zu stabilisierenden Materialien eine hohe Löslichkeit, womit eine gute Verteilung und eine verbesserte Wirksamkeit erreicht wird. Darüber hinaus unterbleibt bei ihrem Einsatz bei der Vernetzung von Polymeren offenbar eine inhibierende Reaktion gegenüber vernetzungsaktiven Radikalen, so dass der Vernetzungsprozess wenig beeinträchtigt wird. So werden beim Einsatz der erfindungsgemässen verkappten Oxidationsinhibitoren in zuvernetzenden Polyolefinen nach der Vernetzung höhere Vernetzungsgrade gefunden als mit den entsprechenden unverkappten Produkten. Es lässt sich hierbei also mit einem geringeren Anteil an Vernetzungsinitiator, d.h. mit einer geringeren Peroxidkonzentration bzw. mit einer geringeren Strahlendosis, eine ausreichende Vernetzung erreichen. Bei radikalisch härtbaren UP-Harzen drückt sich dieser Vorteil bei konstantem Peroxidanteil in einer verkürzten Gelier- und Härtungszeit aus. Ein weiterer Vorteil der erfindungsgemäss eingesetzten Oxidationsinhibitoren besteht darin, dass sie im Verlauf der radikalischen Vernetzung von Polymeren und bei der Härtung von Reaktionsharzen offenbar in weit geringerem Umfang als herkömmliche Oxidationsinhibitoren durch Reaktion mit Radikalen oder reaktiven Gruppen, wie Isocyanat- oder Epoxid-Gruppen, verbraucht werden. Somit wird ihre Wirksamkeit durch Vernetzungs- bzw. Härtungsprozesse kaum beeinträchtigt.

Zur Erklärung der unerwartet guten Wirksamkeit der erfindungsgemässen verkappten Oxidationsinhibitoren kann angenommen werden, dass die hydrolysierbaren Si-O-Bindungen im Polymeren bereits durch geringe Mengen, beispielsweise eindiffundierten Wassers hydrolysiert werden, wobei die aktiven OH-Gruppierungen wieder freigesetzt werden und die Oxidationsinhibitoren ihre Wirksamkeit zurückerlangen. Dabei müsste die

hydrolytische Rückspaltung offensichtlich mit ausreichender Geschwindigkeit erfolgen, so dass nach Einsatz des organischen Materials oder nach der Verarbeitung und Formgebung des Polymeren von Anfang an ausreichende Mengen freier Oxidationsinhibitoren zur Verfügung stehen. Die gute Wirksamkeit kann aber auch eine stoffspezifische Eigenschaft sein.

Ein Grund für die verbesserte Wirksamkeit der verkappten Oxidationsinhibitoren in organischen Materialien, wie thermoplastischen Polyolefinen, dürfte durch die bessere Löslichkeit und die daraus resultierende homogene Verteilung dieser Produkte im Polymermaterial gegeben sein. Dadurch werden offensichtlich schnelle Migrationsverluste vermindert. Die verbesserte Wirksamkeit der verkappten Oxidationsinhibitoren in radikalisch vernetzten Systemen kann zusätzlich zu diesem Effekt durch eine geringe Wechselwirkung zwischen den verkappten Oxidationsinhibitoren und den während der Vernetzung auftretenden vernetzungsaktiven Radikalen erklärt werden.

Analog kann die verbesserte Wirksamkeit in Reaktionsharzen zusätzlich durch eine geringere Wechselwirkung der erfindungsgemässen Oxidationsinhibitoren mit reaktiven Gruppen, wie Isocyanat- oder Epoxid-Gruppen, erklärt werden.

Durch die geeignete Wahl der Verkappungskomponenten, d.h. durch die Art der organischen Reste der für die Verkappung verwendeten Organosilane, kann die Wirksamkeit der Oxidationsinhibitoren und ihr Einfluss auf die Vernetzung, wie im übrigen auch aus den nachfolgenden Beispielen ersichtlich ist, gezielt verändert werden.

So zeigt das Beispiel des Bis(4-hydroxy-2-methyl-5-t-butyl)diphenylthioäthers, dass die Wirksamkeit eines Oxidationsinhibitors gesteigert wird, wenn an Stelle von Trialkylsilylschutzgruppen Dialkylsilylenschutzgruppen verwendet werden. Im ersten Fall kommt eine monomere verkappte Verbindung zum Einsatz, im zweiten Fall eine oligomere. Gleichzeitig wird durch die oligomerisierende Verkappung der die Vernetzung störende Einfluss der Oxidationsinhibitoren verringert.

Beispiele für erfindungsgemäss verkappte Oxidationsinhibitoren sind:

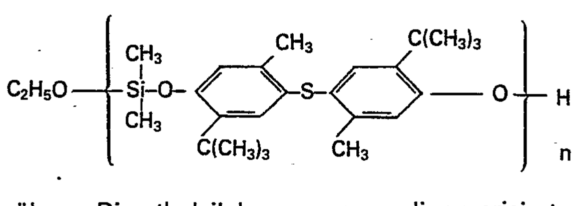

über Dimethylsilylengruppen oligomerisierter Bis(4-hydroxy-2-methyl-5-t-butyl)diphenylthioäther; und

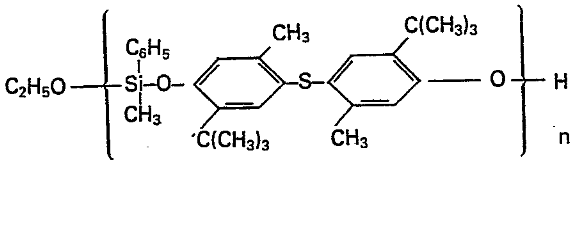

über Methylphenylsilylengruppen oligomerisierter Bis(4-hydroxy-2-methyl-5-t-butyl)diphenylthioäther.

Die Verkappung der phenolischen Oxidationsinhibitoren wird durch Umsetzung mit Silanderivaten der Formel $M_{4-x}Si(R^1)_x$ durchgeführt, wobei M eine zur O-Silylierung befähigte Gruppe ist, beispielsweise Halogen, Alkoxy, Alkenoxy und Silylamino, und x den Wert 1 oder 2 annehmen kann. Bevorzugt wird vor allem die Silylierung mit Silanderivaten, bei denen M Chlor ist; derartige Verbindungen sind beispielsweise Dichlordimethylsilan und 1,3-Dichlor-tetramethyldisiloxan. Die Silylierung mit Chlorsilanen wird in gängigen inerten Lösungsmitteln, wir Toluol und Diäthyläther, durchgeführt, gegebenenfalls unter Zusatz eines wenigstens stöchiometrischen Anteils eines teriären Amins.

Die auf die beschriebene Weise hergestellten silylierten Phenole sind hydrolyseempflindlich und müssen deshalb gegen Feuchtigkeit geschützt werden. Dies erfordert jedoch keine besonderen Massnahmen.

Das erfindungsgemässe Verfahren kann besonders vorteilhaft zum Schutz vernetzter Polymersysteme angewandt werden. Im einzelnen lassen sich insbesondere folgende Polymersysteme nach dem erfindungsgemässen Verfahren stabilisieren:

- Homo- und Copolymerisate von Äthylen und α-Olefinen, wie Propen, Buten-1 und Isobuten, sowie Copolymerisate von Äthylen und Olefinabkömmlingen, wie Vinylacetat und Äthylacrylat
- Terpolymerisate aus Äthylen und Propen mit Dienen, wie Hexadien, Dicyclopentadien oder Äthyliennorbornen
- Mischungen (Polyblends) auf der Basis von Polyolefinen oder mit Polyolefinen als wesentlichem Bestandteil, wie beispielsweise Gemische von Polyäthylen mit Polypropen, Polyisobuten oder Butylkautschuk bzw. Gemische von Polypropen mit Polyisobuten oder Äthylen-Propen-Kautschuk
- Blockcopolymere, beispielsweise aus Styrol, Äthylen und Buten (TPR)
- radikalisch härtbare Polyesterharze sowie Polyurethan- und Epoxidharze
- Polyphenylenoxide.

Die erfindungsgemäss verkappten Oxidationsinhibitoren zeigen eine gute Verträglichkeit mit den Polymeren und verfärben diese – wenn überhaupt – nur geringfügig. Sie werden in die Polymeren in Konzentrationen von 0,01 bis 10,0 Masse-%, vorzugsweise 0,1 bis 5,0 Masse-%, nach den üblichen Methoden eingearbeitet. Zur Stabilisierung von Polyolefinen können Oxidationsinhibitor und Polyolefin beispielsweise in einem Innenmischer vermischt werden.

Polymerkompositionen aus Basispolyolefin und erfindungsgemäss zu verwendenden Oxidationsinhibitoren können radikalisch, beispielsweise durch organische Peroxide oder energiereiche Strahlen, vernetzt werden. Für die peroxidische Vernetzung kommen die üblichen zur Vernetzung von Olefinpolymeren verwendeten organischen

Peroxide in Frage, bevorzugt Dicumylperoxid und di-t-butyl-substituierte Peroxide, wie Di-t-butylperoxid, 1,3-Bis-(t-butyl-peroxyisopropyl)benzol und 2,5-Di-t-butyl-peroxy-2,5-dimethylhexan. Die Vernetzung mit energiereichen Strahlen kann vorzugsweise durch β-Strahlung, aber auch durch γ- oder Röntgenstrahlen erfolgen. Strahlungsquellen sind hierbei Röntgenanlagen oder radioaktive Isotope, bevorzugt Elektronenbeschleuniger.

Die erfindungsgemäss stabilisierten Polymeren können selbstverständlich auch noch andere Zusatzstoffe enthalten, die in Polymerformulierungen verwendet werden, wie Metalldesaktivatoren, Peroxidzersetzer, UV-Absorbentien, vernetzungsbeschleunigende Zusätze, Weichmacher, antistatische Mittel, Flammschutzmittel, Pigmente, Russ und Glasfasern, aber auch mineralische Füllstoffe, wie Kaolin, Kreide und Talk. Die nach dem erfindungsgemässen Verfahren stabilisierten unvernetzten und vernetzten Olefinpolymerisate eignen sich für alle Zwecke, für die diese Hochpolymerklasse bisher verwendet wird, beispielsweise für die Herstellung von Formteilen, Folien, Schläuchen, Rohren und Spritzgussartikeln sowie beschichtete Drähte, Kabel und Leitungen.

Bei Harzsystemen, die aliphatische bzw. cycloaliphatische Kohlenwasserstoffreste oder teilhydrierte Heterocyclen enthalten, werden zur Stabilisierung gegen thermooxidativen Abbau die Oxidationsinhibitoren vorteilhaft vor der Härtung einer der reaktiven Komponenten zugemischt. Die Härtung selbst erfolgt dann nach den bekannten Methoden.

Anhand von Ausführungsbeispielen soll die Erfindung noch näher erläutert werden.

Die gegen thermooxidativen Abbau stabilisierende Wirkung der erfindungsgemässen Stabilisatoren wird in den Beispielen durch volumetrische Messung der Sauerstoffaufnahme von Polyolefinen bzw. Harzfilmen in Abhängigkeit von der Zeit bei einer Temperatur von 135°C und einem Druck von 1 bar nachgewiesen. Sie entspricht der Sauerstoffabnahme in einem geschlossenen, mit reinem Sauerstoff gefüllten System, das die Probe des unvernetzten oder peroxid- bzw. strahlenvernetzten Polyolefins in Form einer 100µm-Pressfolie bzw. die Probe des gehärteten Harzes als 100 bis 200 µm dicken Film enthält. Das System enthält ausserdem noch Bariumoxid als Adsorbens für die sauren gasförmigen Reaktionsprodukte und für Wasser. Als vergleichendes Kriterium für die stabilisierende Wirkung der erfindungsgemässen Oxidationsinhibitoren wird bei Polyolefinen in den folgenden Ausführungsbeispielen die Induktionsperiode gewählt. Dies ist der Zeitraum, der bis zur einsetzenden Autoxidation, d.h. bis zur spontan einsetzenden, stark ansteigenden Sauerstoffaufnahme, verstreicht. Der Beginn der Autoxidation ist aus der graphischen Darstellung der Sauerstoffaufnahme (in ml/g Folie) über der Zeit (in Stunden) durch Rückverlängerung des linearen Teils des die Autoxidation anzeigenden, steil aufsteigenden Kurvenastes bis zum Schnittpunkt mit der Zeitachse sehr einfach zu ermitteln. Bei Harzen wird vereinfacht der Sauerstoffverbrauch in Abhängigkeit von der Zeit ermittelt.

Die prozentuale Vernetzung der vernetzten Polyolefinmischungen wird an 1 mm-Platten durch Ermittlung des unlöslichen Gel-Anteils nach 12stündiger Granulatextraktion (Granulat aus Würfeln der Kantenlänge 1 mm) in siedendem Xylol bestimmt (Gelwert).

Beispiel 1

Beispiel 1 zeigt, dass bei erfindungsgemässem Einsatz eines verkappten oligomeren Oxidationsinhibitors /4/ zur Stabilisierung von vernetztem Polyäthylen ein besseres Vernetzungsergebnis erzielt wird als mit einem unverkappten Oxidationsinhibitor /1/ oder mit vergleichbar verkappten monomeren Oxidationsinhibitoren /2/ und /3/.

a) Strahlenvernetzung

Hochdruckpolyäthylen LDPE ($d = 0{,}918$, $MFI_{190/2} = 0{,}2$) wird im Laborkneter bei 135°C plastifiziert. Nach Zugabe des Oxidationsinhibitors unter Stickstoffbegasung wird 3 Minuten homogenisiert und die Mischung dann granuliert. Aus dem Granuat werden bei 180°C 1 mm-Platten gepresst, die unter einem 750 kV-Kaskadenelektronenbeschleuniger mit einer Dosis von 200 kGy vernetzt werden. Die Mischungsverhältnisse und die Vernetzungsergebnisse (Gelwert) sind in Tabelle 1 zusammengefasst.

Tabelle 1

| | LDPE [g] | Oxidations-inhibitor [g] | Gelwert [% Gel-fraktion] |
|---|---|---|---|
| Bis(4-hydroxy-2-methyl-5-t-butyl)-diphenylthioäther /1/ | 99,60 | 0,40 | 55 |
| Bis(2-methyl-5-t-butyl-4-trimethylsilyloxy)-diphenylthioäther /2/ | 99,44 | 0,56 | 55 |
| Bis(2-methyl-5-t-butyl-4-triphenylsilyloxy)-diphenylthioäther /3/ | 99,02 | 0,98 | 62 |
| über Dimethylsilylengruppen oligomerisierter Bis(4-hydroxy-2-methyl-5-t-butyl)diphenylthioäther /4/ | 99,53 | 0,47 | 65 |

b) Peroxidvernetzung

Hochdruckpolyäthylen LDPE ($d = 0{,}918$, $MFI_{190/2} = 0{,}2$) wird im Laborkneter bei 135°C plastifiziert. Nach Zugabe des Oxidationsinhibitors wird 2 Minuten homogenisiert, anschliessend wird der Vernetzungsinitiator 1,3-Bis(t-butyl-peroxyisopropyl)benzol zugegeben und weitere 2 Minuten homogenisiert. Die Mischung wird dann granuliert und aus dem Granulat werden 1 mm-Platten und 100 µm-Folien gepresst und bei 180°C

während 15 Minuten vernetzt. Die Mischungszusammensetzung und die Vernetzungsergebnisse sind in Tabelle 2 aufgeführt.

Tabelle 2

| | LDPE [g] | Vernetzungsinitiator [g] | Oxidationsinhibitor [g] | Gelwert [% Gelfraktion] |
|---|---|---|---|---|
| Bis(4-hydroxy-2-methyl-5-t-butyl)diphenylthioäther /1/ | 98,40<br>99,10 | 1,20<br>0,50 | 0,40<br>0,40 | 77,5<br>49,0 |
| Bis(2-methyl-5-t-butyl-4-trimethylsilyloxy)-diphenylthioäther /2/ | 98,24<br>98,94 | 1,20<br>0,50 | 0,56<br>0,56 | 83,5<br>68,5 |
| über Dimethylsilylengruppen oligomerisierter Bis(4-hydroxy-2-methyl-5-t-butyl)diphenylthioäther /4/ | 98,33<br>99,03 | 1,20<br>0,50 | 0,47<br>0,47 | 84,0<br>63,0 |

Beispiel 2

Beispiel 2 zeigt die bei der Alterung einer mit einem erfindungsgemässen Oxidationsinhibitor /3/ stabilisierten Polyäthylen-Probe erhaltenen Ergebnisse. Es wird mit den Ergebnissen verglichen, die mit dem entsprechenden unverkappten Oxidationsinhibitor /1/ bzw. mit einem vergleichbar verkappten monomeren Oxidationsinhibitor /2/ erhalten werden.

a) Peroxidvernetzte Proben

Hochdruckpolyäthylen LDPE ($d=0,918$, $MFI_{190/2}=0,2$) wird im Laborkneter bei 135°C plastifiziert. Nach Zugabe des Oxidationsinhibitors wird 2 Minuten homogenisiert, anschliessend der Vernetzungsinitiator 1,3-Bis(t-butylperoxyisopropyl)benzol zugegeben und weitere 2 Minuten homogenisiert. Die Mischung wird dann granuliert und aus dem Granulat werden 100 µm-Folien gepresst, die in der Presse bei 180°C während 15 Minuten vernetzt werden.

Die Proben werden in reinem Sauerstoff bei 135°C gealtert und dabei wird die Induktionsperiode (Beginn der autoxidativen Zersetzung) bestimmt. In Tabelle 3 sind die Mischungsverhältnisse und die Alterungsergebnisse zusammengefasst.

Tabelle 3

| | LDPE [g] | Vernetzungsinitiator [g] | Oxidationsinhibitor [g] | Induktionsperiode [h] |
|---|---|---|---|---|
| Bis(4-hydroxy-2-methyl-5-t-butyl)diphenylthioäther /1/ | 98,40 | 1,20 | 0,40 | 650 |
| Bis(2-methyl-5-t-butyl-4-trimethylsilyloxy)-diphenylthioäther /2/ | 98,28 | 1,20 | 0,52 | 620 |
| über Dimethylsilylengruppen oligomerisierter Bis(4-hydroxy-2-methyl-5-t-butyl)diphenylthioäther /3/ | 98,33 | 1,20 | 0,47 | 650 |

b) Strahlenvernetzte Proben

Die Mischungsherstellung erfolgt wie unter a) beschrieben, allerdings ohne Peroxidzusatz. Die bei 180°C gepressten 100 µm-Folien werden durch energiereiche Elektroden mit einer Dosis von 200 kGy vernetzt. In reiner Sauerstoffatmosphäre werden dann bei 135°C Alterungstemperatur die Induktionsperioden mittels Folienproben bestimmt. Sie sind zusammen mit den Mischungsverhältnissen in Tabelle 4 wiedergegeben.

Tabelle 4

| | LDPE [g] | Oxidationsinhibitor [g] | Induktionsperiode [h] |
|---|---|---|---|
| Bis(4-hydroxy-2-methyl-5-t-butyl)-diphenylthioäther /1/ | 99,60<br>99,40 | 0,40<br>0,60 | 450<br>720 |
| Bis(2-methyl-5-t-butyl-4-trimethylsilyloxy)-diphenylthioäther /2/ | 99,44 | 0,56 | 540 |
| über Dimethylsilylengruppen oligomerisierter Bis(4-hydroxy-2-methyl-5-t-butyl)-diphenylthioäther /3/ | 99,53<br>99,30 | 0,47<br>0,70 | 600<br>1000 |

Die folgenden Beispiele zeigen den Einsatz eines erfindungsgemässen Oxidationsinhibitors in weiteren Polymersystemen, und zwar im Vergleich mit dem entsprechenden unverkappten Oxidationsinhibitor.

Beispiel 3

Ein Gemisch aus EPDM-Kautschuk (mit 5 Gew.-% Dicyclopentadien als Terkomponente) und Naphthenöl im Verhältnis 1:1 ($d=0,87$, Mooneyviskosität ML 1+4, 125°C=50) wird im Laborkneter bei 160°C plastifiziert. Nach Zugabe des Oxidationsinhibitors unter Stickstoff wird 2 Minuten homogenisiert, anschliessend wird 1,3-Bis(t-butylperoxyisopropyl)benzol als Vernetzungsinitiator zugegeben und weitere 2 Minuten homogenisiert. Der Compound wird dann granuliert und zu 1 mm-Platten und 100 µm-Folien verpresst, die bei 180°C während 15 Minuten vernetzt werden. An den 1 mm-Platten werden die Vernetzungsergebnisse bestimmt, die 100µm-Folien werden bei 135°C in Sauerstoff gealtert. Die Mischungsverhältnisse und die Ergebnisse sind in Tabelle 5 zusammengefasst.

Tabelle 5

| | EPDM-Kautschuk [g] | Vernetzungs-initiator [g] | Oxidations-inhibitor [g] | Gelwert [% Gelfraktion] | Induktions-periode [h] |
|---|---|---|---|---|---|
| Bis(4-hydroxy-2-methyl-5-t-butyl)-diphenylthioäther | 98,60 | 0,80 | 0,60 | 47,0 | 260 |
| über Dimethylsilylengruppen oligomerisierter Bis(4-hydroxy-2-methyl-5-t-butyl)-diphenylthioäther | 98,50 | 0,80 | 0,70 | 53,0 | 300 |

Beispiel 4

Handelsübliches Polypropylen PP wird 14 Tage mit Diäthyläther extrahiert und anschliessend 36 h bei 100°C im Ölpumpenvakuum getrocknet. Das stabilisatorfreie Produkt wird dann bei 200°C im Laborkneter plastifiziert, mit Oxidationsinhibitor versetzt und 3 min homogenisiert. Die Mischung wird anschliessend granuliert und bei 180°C zu 100 µm starken Folien verpresst. Die Folienproben werden bei 135°C in einer Sauerstoffatmosphäre gealtert. Die Mischungsverhältnisse und die Alterungsergebnisse sind aus Tabelle 6 ersichtlich.

Tabelle 6

| | pp [g] | Oxi-dations-inhibitor [g] | Induk-tions-periode [h] |
|---|---|---|---|
| Bis(4-hydroxy-2-methyl-5-t-butyl)-diphenylthioäther | 99,40 | 0,60 | 350 |
| über Dimethyl-silylengruppen oligomerisierter Bis(4-hydroxy-2-methyl-5-t-butyl)-diphenylthioäther | 99,30 | 0,70 | 450 |

Ausser bei organischen Polymeren kann das erfindungsgemässe Verfahren auch zur Stabilisierung anderer organischer Materialien, wie elektrische Isolieröle und Schmiermittel, verwendet werden. Ebenso wie Polymere unterliegen nämlich auch niedermolekulare organische Materialien, insbesondere solche mit einem hohen aliphatischen Kohlenwasserstoffanteil oder mit besonders leicht oxidablen aliphatischen Gruppen, wie aliphatische und naphthenische Kohlenwasserstofföle, bei erhöhten Temperaturen einem beschleunigten oxidativen und auch thermischen Abbau.

**Patentansprüche**

1. Verfahren zur Stabilisierung von Polymeren gegen oxidativen und/oder thermischen Abbau mittels phenolischer Oxidationsinhibitoren mit teilweise durch Silyl- bzw. Silylengruppen substituierten inhibierungsaktiven Hydroxylgruppen, dadurch gekennzeichnet, dass oligomere Verbindungen folgender Struktur als Oxidationsinhibitoren verwendet werden:

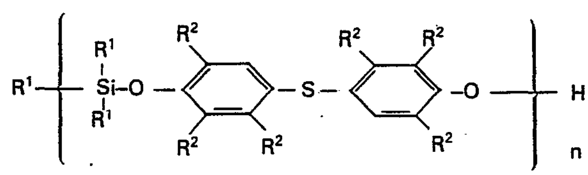

wobei n eine Zahl bis 20 ist, die Reste $R^1$ gleich oder verschieden sind und folgende Bedeutung haben:
Alkyl mit 1 bis 3 C-Atomen, Phenyl, Cycloalkyl, Alkyloxy mit 1 bis 3 C-Atomen, Methoxyäthoxy, Äthoxyäthoxy, Aryloxy, Aralkyloxy mit 7 bis 11 C-Atomen und Cycloalkyloxy, und die Reste $R^2$ gleich oder verschieden sind und Wasserstoff oder n- und iso-Alkyl mit 1 bis 5 C-Atomen bedeuten oder die beiden ortho-ständigen Substituenten $R^2$ zusammen Benzo sein können.

2. Verfahren nach Anspruch 1, dadurch gekennzeichnet, dass 0,01 bis 10,0 Masse-%, vorzugsweise 0,1 bis 5,0 Masse-%, bezogen auf das Polymere, an Oxidationsinhibitor verwendet werden.

3. Verfahren nach Anspruch 1 oder 2, dadurch gekennzeichnet, dass als Polymere unvernetzte oder radikalisch vernetzte Homo- oder Copolymerisate von Äthylen, Propen, Buten-1 und Isobuten, Copolymerisate von Äthylen mit Vinylacetat oder Äthylacrylat, Terpolymerisate, die durch Polymerisation von Äthylen mit Propen in Gegenwart nichtkonjugierter Diene, insbesondere Dicyclopentadien, Hexadien und Äthylidennorbornen, erhalten wurden, Gemische auf der Basis von Polyolefinen oder mit Polyolefinen als wesentlichem

Bestandteil, Blockcopolymere, beispielsweise aus Styrol, Äthylen und Buten, oder Polyphenylenoxide verwendet werden.

4. Verfahren nach Anspruch 1 oder 2, dadurch gekennzeichnet, dass als Polymere radikalisch härtbare Polyesterharze oder Polyurethan- und Epoxidharze verwendet werden.

**Claims**

1. A process for the stabilization of polymers against oxidative and/or thermal decomposition by means of phenolic oxidation inhibitors having inhibition-active hydroxyl groups which are partially substituted by silyl or silylene groups, characterised in that oligomeric compounds of the following structure are used as oxidation inhibitors:

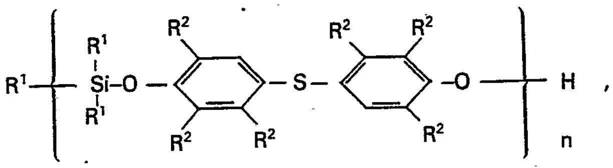

where n is a number up to 20; the residues $R^1$ may be the same or different and signify:
alkyl having 1 to 3 C-atoms, phenyl, cycloalkyl, alkyloxy having 1 to 3 C-atoms, methoxyethoxy, ethoxyethoxy, aryloxy, aralkyloxy having 7 to 11 C-atoms and cycloalkyloxy; and the residues $R^2$ may be the same or different and signify hydrogen or n- and iso-alkyl having 1 to 5 C-atoms, or the two substituents $R^2$ in the ortho position may together be benzo.

2. A process according to Claim 1, characterised in that 0.01 to 10.0% by weight, preferably 0.1 to 5.0% by weight, with respect to the polymer, of the oxidation inhibitor, is used.

3. A process according to Claim 1 or Claim 2, characterised in that non-cross-linked or free radical-cross-linked homo- or copolymers or ethylene, propene, butene-1 and isobutene, copolymerizates of ethylene with vinyl acetate or ethyl acrylate, terpolymers obtained by the polymerization of ethylene with propene in the presence of nonconjugated dienes, in particular dicyclopentadiene, hexadiene and ethylidenenorbornene, mixtures having a polyolefines basis, or with polyolefines as an essential component, block copolymers, consisting, for example, of styrene, ethylene and butene, or polyphenyleneoxides, are used as polymers.

4. A process according to Claim 1 or Claim 2, characterised in that free-radical hardenable polyester resins, or polyurethane resins and epoxy resins, are used as polymers.

**Revendications**

1. Procédé de stabilisation de polymères, vis-à-vis de la dégradation par voie oxydante et/ou par voie thermique, au moyen d'inhibiteurs d'oxydation phénoliques ayant des groupes hydroxy actifs d'inhibition substitués partiellement par des groupes silyle ou sylilène, caractérisé en ce qu'il consiste à utiliser comme inhibiteurs d'oxydation des composés oligomères ayant la structure suivante:

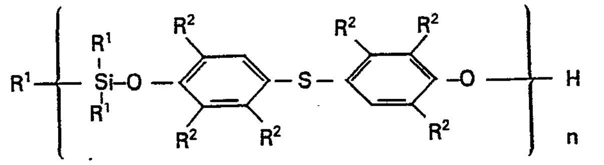

dans laquelle n est un nombre allant jusqu'à 20, les radicaux $R^1$ sont identiques ou différents et ont la signification suivante:
alcoyle ayant de 1 à 3 atomes de carbone, phényle, cycloalcoyle, alcoyloxy ayant de 1 à 3 atomes de carbone, méthoxyéthoxy, éthoxyéthoxy, aryloxy, aralcoyloxy ayant de 7 à 11 atomes de carbone et cycloalcoyloxy, et les radicaux $R^2$ sont identiques ou différents et représentent l'hydrogène ou un alcoyle normal ou un isoalcoyle ayant de 1 à 5 atomes de carbone, ou les deux substituants $R^2$ en position ortho peuvent représenter ensemble un benzo.

2. Procédé suivant la revendication 1, caractérisé en ce que l'inhibiteur d'oxydation représente de 0,01 à 10,0% en masse et, de préférence, de 0,1 à 5,0% en masse du polymère.

3. Procédé suivant la revendication 1 ou 2, caractérisé en ce qu'il consiste à utiliser comme polymères des homopolymères ou des copolymères non réticulés ou réticulés par voie radicalaire, e'éthylène, de propène, de butène-1 et d'isobutène, des copolymères d'éthylène et d'acétate de vinyle ou d'acrylate d'éthyle, des terpolymères qui ont été obtenus par polymérisation de l'éthylène et du propène en présence de diènes non conjuguées, notamment de dicyclopentadiène, d'hexadiène et d'éthylidènenorbornène, des mélanges à base de polyoléfines ou ayant des polyoléfines comme constituant principal, des copolymères séquencés, par exemple de styrène, d'éthylène et de butène, ou des poly(oxydes de phénylène).

4. Procédé suivant la revendication 1 ou 2, caractérisé en ce qu'il consiste à utiliser comme polymères des résines de polyester durcissables par voie radicalaire ou des résines de polyuréthanne et d'époxyde.